# EUROPEAN PATENT SPECIFICATION

(11) **EP 4 456 007 B1**
(45) Date of publication and mention of the grant of the patent: **07.10.2026**
(21) Application number: 24172627.2
(22) Date of filing: 26.04.2024
(51) Int. Cl.: G06V 10/24, G06V 10/50, G06V 10/75, G06V 10/764, G06V 10/80, G06V 20/10, G06V 20/40, G06T 7/292, G06V 10/82, G06V 20/13

(54) **SYSTEMS AND METHODS FOR MULTIPLE-SENSOR OBJECT TRACKING**
SYSTEME UND VERFAHREN ZUR MEHRFACHSENSOROBJEKTVERFOLGUNG
SYSTÈMES ET PROCÉDÉS DE SUIVI D'OBJET À CAPTEURS MULTIPLES

(30) Priority: 28.04.2023 US 202363462790 P
(43) Date of publication of application: 30.10.2024
(60) Divisional application: 26186321.1 / 4 787 308
(73) Proprietor: Palantir Technologies Inc., Aventura, Florida 33180 (US)
(72) Inventor: DRISCOLL, Joseph Adam, San Francisco (US); PATSEKIN, Aleksandr, Foster City (US); RADFORD, Ben, Denver (US); MARASCO, Daniel, Washington (US); LYMPEROPOULOS, Dimitrios, Kirkland (US); VAN ANDEL, Ethan, Berkeley (US); JAE KIM, Keun, Kirkland (US); CAMERON, Mary, Washington (US); GORACZKO, Michel, Seattle (US); SACKLER, Miles, Seattle (US); SRIKHANTA, Prasanna, Seattle (US); LALONDE, Rodney, Arlington (US); RAMSEY, Stephen, Mountain View (US); SHEN, Tong, Redmond (US); LI, Xin, Cupertino (US); WU, Yue, Lynnwood (US); DERWIN, Cameron, Seattle (US)
(74) Representative: Derry, Paul Stefan

(56) References cited:
- US-A1- 2020 143 545
- YE YUANXIN ET AL: "A robust multimodal remote sensing image registration method and system using steerable filters with first- and second-order gradients", ISPRS JOURNAL OF PHOTOGRAMMETRY AND REMOTE SENSING, AMSTERDAM [U.A.] : ELSEVIER, AMSTERDAM, NL, vol. 188, 30 April 2022 (2022-04-30), pages 331 - 350, XP087059227, ISSN: 0924-2716, DOI: 10.1016/J.ISPRSJPRS.2022.04.011
- MUHAMMAD HASSAN ET AL: "An Efficient Method of Tracking across Multiple Cameras", TRUST, SECURITY AND PRIVACY IN COMPUTING AND COMMUNICATIONS (TRUSTCOM), 2011 IEEE 10TH INTERNATIONAL CONFERENCE ON, IEEE, 16 November 2011 (2011-11-16), pages 1477 - 1481, XP032086981, ISBN: 978-1-4577-2135-9, DOI: 10.1109/TRUSTCOM.2011.203
- KARUNASEKERA HASITH ET AL: "Multiple Object Tracking With Attention to Appearance, Structure, Motion and Size", IEEE ACCESS, vol. 7, 31 July 2019 (2019-07-31), pages 104423 - 104434, XP011739318, DOI: 10.1109/ACCESS.2019.2932301
- CHU PENG ET AL: "TransMOT: Spatial-Temporal Graph Transformer for Multiple Object Tracking", ARXIV.ORG, 3 April 2021 (2021-04-03), Ithaca, NY 14853, pages 1 - 10, XP093197200, Retrieved from the Internet <URL:https://arxiv.org/abs/2104.00194> [retrieved on 20240821]
- ATOUSA TORABI ET AL: "An iterative integrated framework for thermal-visible image registration, sensor fusion, and people tracking for video surveillance applications", COMPUTER VISION AND IMAGE UNDERSTANDING, ACADEMIC PRESS, US, vol. 116, no. 2, 21 October 2011 (2011-10-21), pages 210 - 221, XP028346060, ISSN: 1077-3142, DOI: 10.1016/J.CVIU.2011.10.006

## Description

### CROSS REFERENCE TO RELATED APPLICATIONS

This application claims priority to U.S. Provisional Application No. 63/462,790, entitled "SYSTEMS AND METHODS FOR MULTIPLE SENSOR OBJECT TRACKING," and filed on April 28, 2023.

### TECHNICAL FIELD

Certain embodiments of the present disclosure relate to object tracking. More particularly, some embodiments of the present disclosure relate to multiple-sensor object tracking.

### BACKGROUND

There are two major computer vision based object tracking models: multiple object tracking (MOT) and single object tracking (SOT). Often, MOT models require training a detector with predefined classes and the tracking detected objects of predefined classes across frames of a video. Comparatively, often SOT models do not require a separately trained object detector, but instead can be designed to track any generic object by specifying the target of interest.

Conventional systems and methods for object tracking may use one or more sensors, such as narrow band cameras, wide band cameras, infrared (IR) cameras, electro-optic (EO) cameras, and/or the like. In some examples, conventional systems and methods typically use object detection techniques that are computationally costly, inefficient (e.g., in terms of time and/or resources), and that make it difficult to track an object across different sensor feeds.

The U.S. patent application US 2020/143545 A1 describes a computer-implemented method for tracking. The method comprises obtaining, from an imaging device supported by a carrier of an unmanned aerial vehicle, an infrared image and a visible image; obtaining a combined image based on the infrared image and the visible image; identifying a target in the combined image; and generating control signals for tracking the identified target using the imaging device.

The conference paper entitled "An Efficient Method of Tracking across Multiple Cameras" by Muhammad Hassan et al., 10th International Conference on Trust, Security and Privacy in Computing and Communications (TRUSTCOM), IEEE, 16 November 2011, pages 1477-1481, DOI: 10.1109/TRUSTCOM.2011.203, discloses a method for recovering field-of-view lines by using the perspective transformation and the concept of homography. The method is used for tracking multiple people in multi-camera system.

Hence, it is desirable to improve techniques for object tracking.

### SUMMARY

Certain embodiments of the present disclosure relate to object tracking. More particularly, some embodiments of the present disclosure relate to multiple sensor object tracking.

At least some aspects of the present disclosure are directed to a method for multiple sensor object tracking. The method includes: receiving a first sensor feed and a second sensor feed from a plurality of sensors The first sensor feed includes a set of first images, and the second sensor feed includes a set of second images. The method includes generating an image transformation based on at least one first image in the set of first images and at least one second image in the set of second images, applying the image transformation to the set of second images, aggregating the set of first images and the set of transformed second images to generate a set of aggregated images, and applying a multiple object tracking model to the set of aggregated images to identify a plurality of objects. The method is performed using one or more processors.

At least some aspects of the present disclosure are directed to a system for multiple sensor object tracking. The system includes at least one processor, and at least one memory storing instructions that, when executed by the at least one processor, causes the system to perform a set of operations. The set of operations include: receiving a first sensor feed and a second sensor feed from a plurality of sensors respectively. The first sensor feed includes a set of first images, and the second sensor feed includes a set of second images. The set of operations include generating an image transformation based on at least one first image in the set of first images and at least one second image in the set of second images, applying the image transformation to the set of second images, aggregating the set of first images and the set of transformed second images to generate a set of aggregated images, and applying a multiple object tracking model to the set of aggregated images to identify a plurality of objects.

The aggregating the set of transformed first images and the set of transformed second images includes: arranging the first image in the set of first images captured at a first time and a transformed second image in the set of transformed second images captured at approximately the first time consecutive to each other. The multiple object tracking model is configured to track the plurality of objects across the set of aggregated images by treating images captured at approximately the same time by the first sensor feed and the second sensor feed as though they are consecutive images captured by a single sensor.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIG. 1 is an illustrative example of an object tracking system or workflow, according to certain embodiments of the present disclosure.
FIG. 2 is an illustrative example of a method for object tracking, according to certain embodiments of the present disclosure.
FIG. 3 is a simplified diagram showing a method for object tracking according to certain embodiments of the present disclosure.
FIG. 4 is an illustrative example of a multiple sensor object tracking according to certain embodiments of the present disclosure.
FIG. 5 illustrates a simplified diagram showing a computing system for object tracking, according to certain embodiments of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods are often not capable of efficiently identifying objects across different sensor feeds (e.g., video feeds). Conventional systems and methods typically use object detection techniques, which leads to increased cost and decreased efficiency, and is more difficult to track an object across different sensor feeds. For example, such conventional systems are often not capable of efficiently identifying objects across different sensor feeds (e.g., across different video feeds).

Various embodiments of the present disclosure can achieve benefits and/or improvements by a computing system receiving data from multiple sensors and using computing models to process the sensor data and identify and track one or more objects. In some embodiments, benefits include significant improvements, including, for example, increased efficiency, reduced complexity, and improved accuracy, in tracking multiple objects across multiple sensor feeds. In certain embodiments, benefits include increased object tracking accuracy by fusing different sensor feeds, for example, sensor feeds that complement each other. In some embodiments, systems and methods are configured to convert different video feeds to a same pixel space and use temporal context and spatial context.

At least some embodiments of the present disclosure are directed to multiple sensor object tracking. According to certain embodiments (e.g., certain overhead imagery/video application scenarios), there are multiple types of sensors looking at the same location at the same time. For example, the types of sensors can include narrow band cameras, wide band cameras, infrared (IR) cameras, electro-optic (EO) cameras, and/or the like. In some embodiments, one or more sensors (e.g., each sensor) feed to an object detector and tracker to generate detection tracks. In certain embodiments, given detector and tracker accuracy may not be accurate, and different sensors may complement each other, it can be beneficial to be able to fuse the output of object trackers running independently on these different sensor feeds (e.g., video feeds) to generate a single set of detection tracks. In some embodiments, systems and methods may include fusing detection tracks between narrow and wide camera feeds as well as between EO and IR feeds.

According to some embodiments, systems and methods may first geo-register different video feeds independently. In certain embodiments, systems and methods may map detections from each video feed to the same geo-coordinate space. In some embodiments, with sufficiently accurate georegistration, the detections across two or more sensor feeds (e.g., camera feeds) that overlap can be instantly matched resulting in a single set of tracks. In certain examples, this approach would not work well because georegistration can often fail, especially in the case of narrow video feeds. In such examples, detections from the individual video feeds will not properly align resulting in poor performance.

According to certain embodiments, fusion at the object and/or track level, where an identified object is associated with a track identifier (ID), also faces one or more challenges, such as, 1) different sensor modality: objects in EO and IR sensors have very different appearances; 2) different sensor bands: wide vs narrow causes different object size/scale; 3) different rotation angle: objects have different orientations; 4) different view angle: different degree of geometric distortions; 5) temporal out-of-synchronization: different object motion and trajectory; and/or 6) object detection/tracking results may not be accurate (false positives, false negatives, ID switches). In some embodiments, these challenges may cause some object/track level fusion approaches (e.g., using its appearance or motion/trajectory, etc. to match) to not work well.

According to some embodiments, systems and methods can convert a first set of image frames in a first video and a second set of image frames in a second video to a same pixel space. In certain embodiments, systems and methods can convert a first set of image frames in a first video and a second set of image frames in a second video to a same pixel space via image matching. In some embodiments, systems and methods can generate a sequence of image frames by combining the first set of image frames and the second set of image frames to generate an aggregated set of image frames. The systems and methods generate a sequence of image frames by combining the first set of image frames and the second set of image frames to generate an aggregated set of image frames, where two respective image frames, in the two sets of image frames respectively, that, taken at the same time or close in time, are arranged as adjacent image frames in the aggregated set of image frames. In some embodiments, systems and methods can feed the aggregated set of image frames to an object tracker to track one or more objects across the two videos.

According to certain embodiments, an object tracking system performs image matching across different sensor feeds (e.g., visual data, videos) captured by the different sensors to map detections to the same pixel space. In some embodiments, the system treats the detections of the image-matched sensor feeds as though they are consecutive frames captured by a single (virtual) sensor. In certain embodiments, the system can use an object tracker to match the detections (e.g., tracking objects) across sensor feeds of two or more sensors and output a single set of tracks (e.g., an identified object with a same track ID across different sensor feeds). In some embodiments, an image frame, also referred to as a frame, is an image in a sequence of images or an image in a video. In certain embodiments, a sensor feed, also referred to as a video feed, is a video stream or a sequence of images captured over time by a sensor.

According to some embodiments, instead of performing georegistration on the individual video feeds, the object tracking systems and methods apply image matching techniques such as, for example, AWOGs (Angle-Weighted Oriented Gradients), CFOG (Channel Features of Orientated Gradients), and/or the like, across different video feeds. In certain embodiments, image matching allows the object tracking system to map the different video feeds to the same pixel space. The system maps different video feeds to the same pixel space as opposed to the same geolocation when geo-registration is used. In certain embodiments, image matching is a simpler problem (in the computational sense) compared to georegistration and allows for more reliable/persistent results.

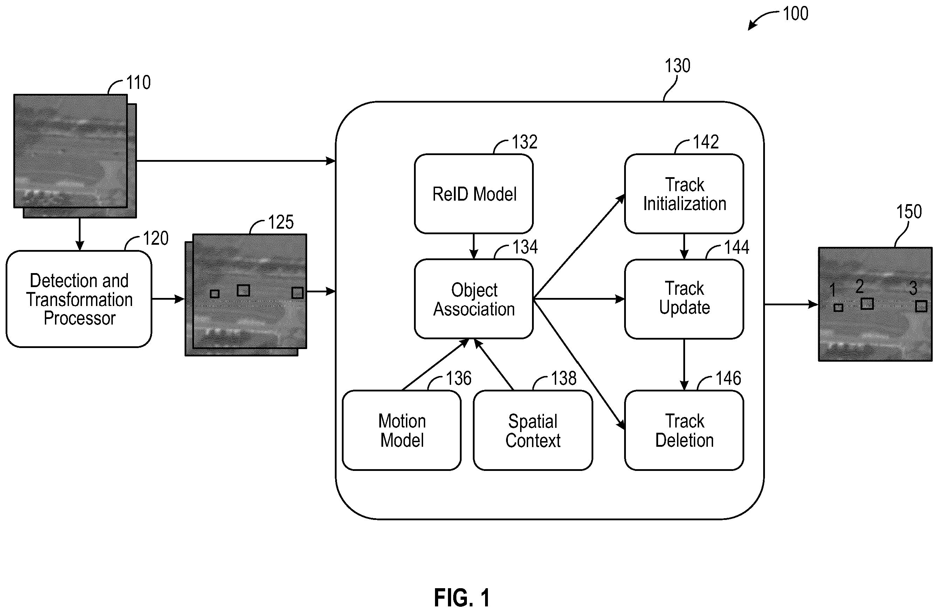

FIG. 1 is an illustrative example of an object tracking system or workflow 100, according to certain embodiments of the present disclosure. FIG. 1 is merely an example. One of ordinary skill in the art would recognize many variations, alternatives, and modifications. According to some embodiments, the object tracking system includes one or more video feeds 110, one or more detection and transformation processors 120, and a multiple object tracker 130 (e.g., a MOT, a MOT tracker, a MOT module, a MOT system). In certain embodiments, the one or more detection and transformation processor 120 can generate an aggregated video feed 125. In some embodiments, the MOT 130 includes a re-identification model 132, an object association model 134, a motion model 136, spatial context 138, track initialization process 142, track update process 144, and track deletion process 146. In certain embodiments, the MOT 130 can generate a tracking result 150. In certain embodiments, various components of the object tracking system can improve fusion accuracy among various sensor feeds, for example, in the case of unreliable detection/tracking results of each individual video feed or significant image matching error changes.

According to certain embodiments, the systems and methods of object tracking use a computing model (e.g., a machine-learning model). In certain embodiments, a model, also referred to as a computing model, includes a model to process data. A model includes, for example, an artificial intelligence (AI) model, a machine-learning (ML) model, a deep-learning (DL) model, an artificial neural network (ANN), a deep neural network (DNN), an image processing model, an algorithm, a rule, other computing models, and/or a combination thereof.

Although the above has been shown using a selected group of components in the object tracking system or workflow 100, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to certain embodiments, the video feeds 110 are from two or more image sensors. In some embodiments, the video feeds 110 are from two or more types of image sensors. In certain embodiments, each video feed 110 includes a set of images (e.g., image frames). In some embodiments, the video feeds 110 include a first video (e.g., a video stream) and a second video, which are corresponding to a set of first images and a set of second images. In certain embodiments, the first video feed and the second video feed are captured by different image sensors. In some embodiments, the first video feed and the second video feed are captured by different types of image sensors (e.g., narrow band image sensor, wide band image sensor, EO image sensor, IR image sensor, satellite image sensor, etc.).

According to some embodiments, the detection and transformation processor 120 identifies a set of detected objects in the video feeds 110. In certain embodiments, the detection and transformation processor 120 identifies a set of first detected objects in the first video and/or one or more first images in the set of first images. In some embodiments, the detection and transformation processor 120 identifies a set of second detected objects in the second video and/or one or more second images in the set of second images.

According to certain embodiments, the detection and transformation processor 120 applies one or more image-matching techniques (e.g., AWOGs, CFOG, etc.) to the first video and the second video. In some embodiments, the detection and transformation processor 120 applies one or more image-matching techniques to one or more first images in the set of first images and one or more second images in the set of second images. In certain embodiments, the detection and transformation processor 120 generates an image transformation using the one or more image-matching techniques. In some embodiments, the detection and transformation processor 120 generates an image transformation between the first video and the second video using the one or more image-matching techniques, for example, in a same pixel space.

According to some embodiments, the detection and transformation processor 120 applies the image transformation (e.g., image matching techniques) to the set of first images to generate a set of transformed (e.g., mapped) first images. In certain embodiments, the detection and transformation processor 120 applies the image transformation to the set of second images to generate a set of transformed second images. In some embodiments, the image transformation is applied to the first set of images or the set of second images. In certain embodiments, the image transformation is applied to only one of the first set of images and the set of second images.

According to certain embodiments, the detection and transformation processor 120 aggregates the set of first images (e.g., the set of transformed first images) with the set of second images (e.g., the set of transformed second images) to generate a set of aggregated images 125. In some embodiments, the detection and transformation processor 120 aggregates the set of first images (e.g., the set of transformed first images) with the set of second images (e.g., the set of transformed second images) to generate the set of aggregated images 125 based on temporal context. In certain embodiments, the detection and transformation processor 120 arranges a first image in the set of first images captured at a first time and a second image in the set of second images captured at approximately the first time adjacent to each other in the set of aggregated images.

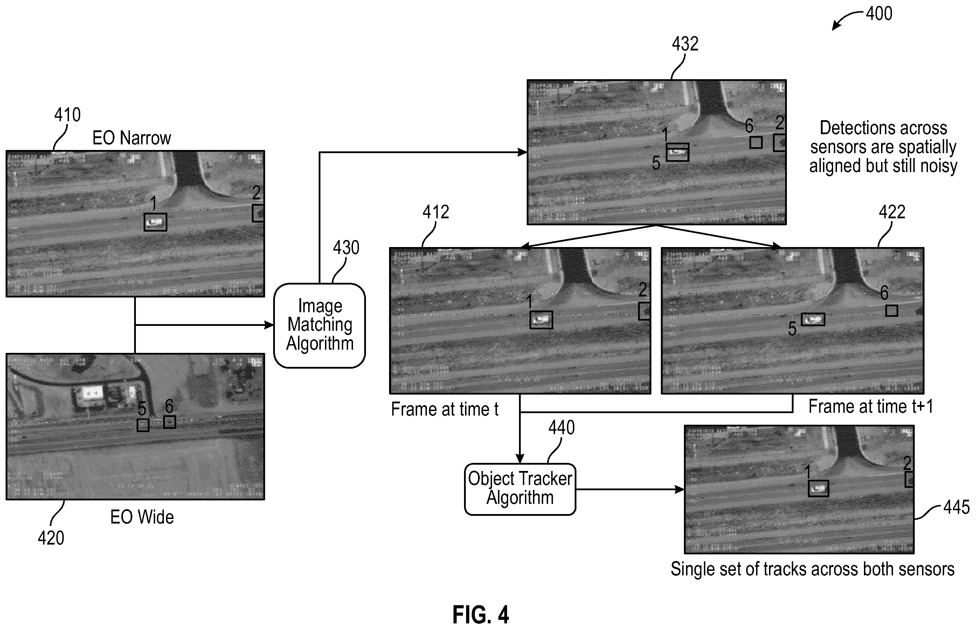

FIG. 4 is an example of two video feeds (e.g., sensor feeds) 410 and 420. As an example, the image frame 412 from the video feed 410 and the image frame 422 from the video feed 420 are captured by two different sensors or two different types of sensors at approximate the same time. In some examples, the image matching algorithm 430 indicates the detections across the video feeds 410 and 420 are noisy (e.g., tracking ID 2 does not match tracking ID 6). In certain examples, the image frame 422 is transformed (e.g., mapped), for example, based on image matching results. For example, the transformed image frame 422 is arranged as a subsequent image frame of the image frame 412 in the set of aggregated images.

According to some embodiments, referring back to FIG. 1, the set of first detected objects are associated with or assigned to a set of first tracking IDs and the set of first detected objects are associated with or assigned to a set of second tracking IDs different from the set of first tracking IDs. In certain embodiments, the multiple object tracker 130 can match non-overlapping detections over time in a video feed (e.g., can match moving cars or people). In some embodiments, the multiple object tracker 130 (e.g., MOT tracker) can match the set of first detected objects and the set of second detected objects by processing the set of aggregated images 125. In some embodiments, the multiple object tracker 130 can match the set of first detected objects and the set of second detected objects by processing the set of aggregated images 125, using the object association model 134. In some embodiments, the non-overlapping detections across video feeds, that might be the result of the error in the image matching step, are very similar to the non-overlapping detections of moving objects (such as vehicles, people, animals and/or other objects), in a single video feed over time. In certain embodiments, assuming the image matching error characteristics do not drastically change over time, the multiple object tracker 130 may leverage a motion model 136, for example, to reliably generate a single set of tracks across all video feeds.

According to certain embodiments, the MOT tracker 130 can be leveraged to match non-overlapping detections over time in a video feed. In some embodiments, the MOT tracker 130 includes a motion model 136. In certain embodiments, the motion model 136 includes a linear motion model. In some embodiments, the motion model 136 includes a filter that estimates the state of a linear dynamic system from a series of noisy measurements. For example, in some embodiments, the motion model 136 includes a Kalman filter.

According to some embodiments, the MOT tracker 130 includes a re-identification (ReID) model 132. In certain embodiments, the re-identification model 132 includes an appearance model (e.g., a similarity machine-learning model, a regression similarity learning model, a classification similarity learning model, a ranking similarity learning model, etc.). In some embodiments, the re-identification model 132 includes a deep neural network-based model to capture appearance similarity. In some examples, the re-identification model 132 includes a Siamese neural network and/or the like. In certain embodiments, the re-identification model 132 determines one or more similarity metrics between the set of first detected objects and the set of second detected objects. In some embodiments, the re-identification model 132 determines one or more similarity distances between the set of first detected objects and the set of second detected objects. In the example illustrated in FIG. 4, the set of first detected objects identified from the first sensor feed 410 include tracking ID 1 and tracking ID 2, and the set of second detected objects identified from the second sensor feed 420 include tracking ID 5 and ID 6. In this example, the re-identification model may determine tracking ID 1 is similar to tracking ID 5 and tracking ID 2 is similar to tracking ID 6.

According to certain embodiments, the re-identification model 132, the object association model 134, and/or the MOT tracker 130 can match and/or associate objects based on motion and/or appearance. In some embodiments, the re-identification model 132, the object association model 134, and/or the MOT tracker 130 can assign weights to one or more motion parameters and/or one or more appearance parameters. In some embodiments, the re-identification model 132, the object association model 134, and/or the MOT tracker 130 can rank one or more motion parameters and/or one or more appearance parameters. In certain embodiments, the re-identification model 132, the object association model 134, and/or the MOT tracker 130 can assign tracking IDs based on the weighted and/or ranked result of the motion model and/or one or more appearance model and one or more criteria, for example, one or more predetermined thresholds. In some embodiments, the re-identification model 132, the object association model 134, and/or the MOT tracker 130 can determine a first object in the set of first detected objects and a second object in the set of second detected objects to have a same tracking ID if the weighted and/or ranked result of the motion model and/or one or more appearance model meets one or more criteria, for example, higher than one or more predetermined thresholds.

In certain embodiments, the re-identification model 132, the object association model 134, and/or the MOT tracker 130 can determine a similarity metric between a first object in the set of first detected objects and a second object in the set of second detected objects, determine the similarity metric to be higher than a predetermined threshold, and determine the first object and the second object to have a same tracking ID and/or re-assign a tracking ID to the first object and/or the second object. In some embodiments, the re-identification model 132, the object association model 134, and/or the MOT tracker 130 can determine a similarity distance between a first object in the set of first detected objects and a second object in the set of second detected objects, determine the similarity metric to be higher than a predetermined threshold, and determine the first object and the second object to have a same tracking ID and/or re-assign a tracking ID to the first object and/or the second object.

In certain embodiments, the re-identification model 132, the object association model 134, and/or the MOT tracker 130 can determine a similarity metric between a first object in the set of first detected objects and a second object in the set of second detected objects. In some examples, the re-identification model 132, the object association model 134, and/or the MOT tracker 130 can determine a spatial relationship of the first object and the second object. In some examples, the re-identification model 132, the object association model 134, and/or the MOT tracker 130 can determine whether the similarity metric meets a similarity criterion and/or whether the spatial relationship meets a spatial criterion. In some embodiments, if both the similarity criterion and the spatial criterion are met, the re-identification model 132, the object association model 134, and/or the MOT tracker 130 can determine the first object and the second object to have a same tracking ID and/or re-assign a tracking ID to the first object and/or the second object.

In certain examples, the system 100 combines the re-identification model 132 with the motion model 136 to assign the tracking IDs. In some examples, the system can perform fusion of sensor feeds between narrow and wide band sensors where appearances still look similar between sensors after image matching since both have similar scale, rotation, and/or the like. In some examples, performing fusion of sensor feeds refers to the process of combining data or from multiple sensors to improve the overall accuracy, reliability, and/or completeness of data being gathered about a system or environment.

According to certain embodiments, the MOT tracker 130 determines a spatial context 138 of one or more objects. In some embodiments, the spatial context includes a spatial relationship among different objects (e.g., two or more detected objects). In certain embodiments, the spatial relationship includes a spatial graph. In some embodiments, the MOT tracker 130 includes a spatial graph matching module along with appearance and motion to more robustly fuse sensor feeds 110 among different sensors. In certain embodiments, the MOT tracker 130 can use temporal context (e.g., the track trajectory and appearance changes, over time, of each sensor feed) to track objects, for example, establishing the initial tracks or assigning initial tracking IDs.

According to some embodiments, the object association model 134 (e.g., the object association module) uses or includes an optimization algorithm (e.g., Hungarian algorithm, etc.) that takes into consideration motion and/or distance, appearance similarity, spatial context, and/or the like, to determine tracking ID assignment. In some embodiments, the object association model 134 includes one or more association functions, for example, association functions for associating objects in different frames as one object. In the example illustrated in FIG. 4, the object tracking result 445 includes a set of re-identified tracking IDs. For example, the set of second detected objects (e.g., object 5 and object 6) in the image frame 422 are assigned to tracking IDs matching to the set of first detected objects (e.g., object 1 and object 2) in the image frame 412.

According to certain embodiments, the object association model 134 may use spatial context 138, the motion model 136 (e.g., more complex motion model), and/or a different association algorithm for fusion. In some embodiments, for low confidence image matching and/or detection track matching scenarios, the object tracking system 100 can use image matching at neighboring frames (e.g., adjacent frames) to ensemble results since for high frame rate videos, scene/objects may look very similar, and objects may not move much between neighboring frames. In certain embodiments, the MOT tracker 130 may perform track initialization process 142, track update process 144, and/or track deletion process 146. In some embodiments, the MOT tracker 130 may perform track initialization process 142, track update process 144, and/or track deletion process 146, based on inputs from the object association model 134.

According to some embodiments, to further improve runtime efficiency, if objects are sparse in an image, the object tracking system 100 can use object region aware image matching to only match images for certain parts of the images to save computation time. In certain embodiments, the object tracking system 100 can sample templates (e.g., structured templates) only for the regions where there are objects of interest and potentially make image matching more accurate for these regions.

In some embodiments, the object tracking system 100 may include a storage repository (not shown) (e.g., a data repository) can include one or more sensor feeds, one or more aggregated sets of sensor feeds, one or more tracked objects (e.g., with track IDs), one or more temporal contexts, one or more spatial contexts, and/or the like. The repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In certain embodiments, various components in the object tracking system 100 can interact with one another via a software interface. In some embodiments, a software interface includes an application programming interface (API), a web service interface, retrieving information from a file, retrieving information from a data repository, and/or the like. In some cases, various components in the object tracking system 100 can execute software or firmware stored in non-transitory computer-readable medium to implement various processing steps. Various components and processors of the object tracking system 100 can be implemented by one or more computing devices including, but not limited to, circuits, a computer, a cloud-based processing unit, a processor, a processing unit, a microprocessor, a mobile computing device, and/or a tablet computer. In some cases, various components of the object tracking system 100 (e.g., the detection and transformation processor 120, the multiple object tracker 130, etc.) can be implemented on a shared computing device. Alternatively, a component of the object tracking system 100 can be implemented on multiple computing devices. In some implementations, various modules and components of the object tracking system 100 can be implemented as software, hardware, firmware, or a combination thereof. In some cases, various components of the object tracking system 100 can be implemented in software or firmware executed by a computing device.

Various components of the object tracking system 100 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

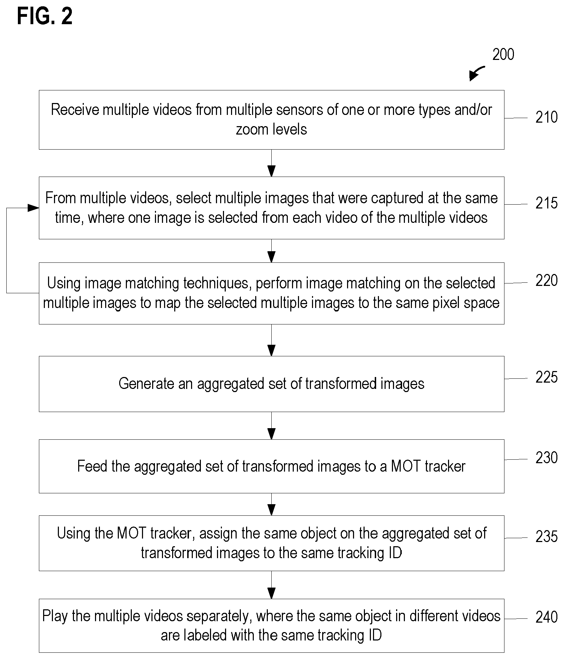

FIG. 2 is a simplified diagram showing a method 200 for multiple sensor object tracking according to certain embodiments of the present disclosure. This diagram is merely an example. One of ordinary skill in the art would recognize many variations, alternatives, and modifications. The method 200 for multiple sensor object tracking includes processes 210, 215, 220, 225, 230, 235, and 240. Although the above has been shown using a selected group of processes for the method 200 for multiple sensor object tracking, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 200 are performed by a system (e.g., the computing system 500). In certain examples, some or all processes (e.g., steps) of the method 200 are performed by a computer and/or a processor directed by a code. For example, a computer includes a server computer and/or a client computer (e.g., a personal computer). In some examples, some or all processes (e.g., steps) of the method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 210, the system receives multiple videos from multiple sensors of one or more types of sensors (e.g., narrow-band camera, wide-band camera, infrared camera, electro-optic (EO) camera, satellite camera, etc.) and/or the same type of sensor with one or more zoom levels (e.g., EO narrow and EO wide). For example, the EO narrow Video A includes original images A1, A2, etc., and EO wide video B includes original images B1, B2, etc., where original images A1 and B1 were captured at a same time, original images A2 and B2 were captured at another same time, and original images A3 and B3 were captured at yet another same time.

In certain embodiments, at process 215, from the received multiple videos, the system selects multiple images select multiple images that were captured at the same time or approximately at the same time (e.g., within 0.1 second, within 1 second, within 5 seconds, etc.), wherein one image is selected from each video of the received multiple videos. As an example, the system selects original image A1 from EO narrow Video A, and selects original image B1 from EO wide video B. In some embodiments, at process 220, using image matching techniques (e.g., AWOGs, CFOG, etc.), the system performs image matching on the selected multiple images to map (e.g., transform) the selected multiple images to the same pixel space. For example, using image matching techniques, the system performs image matching on original images A1 and B1 in order to map original images A1 and B1 to the same pixel space.

According to some embodiments, the system may repeat processes 215 and 220 at different times to form multiple groups of transformed (e.g., mapped) multiple images. In certain embodiments, the system forms a first group of transformed A1 and B1, a second group of transformed A2 and B2, and a third group of transformed A3 and B3. In certain embodiments, at process 225, the system generates an aggregated set of transformed images. In some embodiments, the aggregated set of transformed images includes the multiple groups of transformed images, where a group of transformed images are arranged adjacent to each other. For example, the aggregated set of transformed images includes the transformed images A1, B1, A2, B2, A3, B3, and the like.

According to certain embodiments, at process 230, the system feeds the aggregated set of transformed images sequentially into a MOT tracker (e.g., a MOT 130, a detector and a MOT tracker). In some embodiments, at process 235, using the MOT tracker, the system assigns the same object on these image-matched multiple images (selected from different videos) to the same tracking ID. As an example, using the detector and the MOT tracker, the system assigns the same object on these transformed images A1, B1, A2, B2, A3, B3, ... to the same tracking ID.

According to certain embodiments, one or more aspects of the method 200 use a computing model (e.g., a machine-learning model). In certain embodiments, a model, also referred to as a computing model, includes a model to process data. A model includes, for example, an artificial intelligence (AI) model, a machine-learning (ML) model, a deep-learning (DL) model, an artificial neural network (ANN), a deep neural network (DNN), an image processing model, an algorithm, a rule, other computing models, and/or a combination thereof.

According to some embodiments, at process 240, the system is configured to play the multiple videos (from the multiple types of sensors) separately, where the same object in different videos are labeled with the same tracking ID. For example, the system plays EO narrow Video A (including original images A1, A2, A3, etc.) and plays EO wide video B (including original images B1, B2, B3, etc.) separately, where the same object is labeled with the same tracking ID in these two different videos A and B.

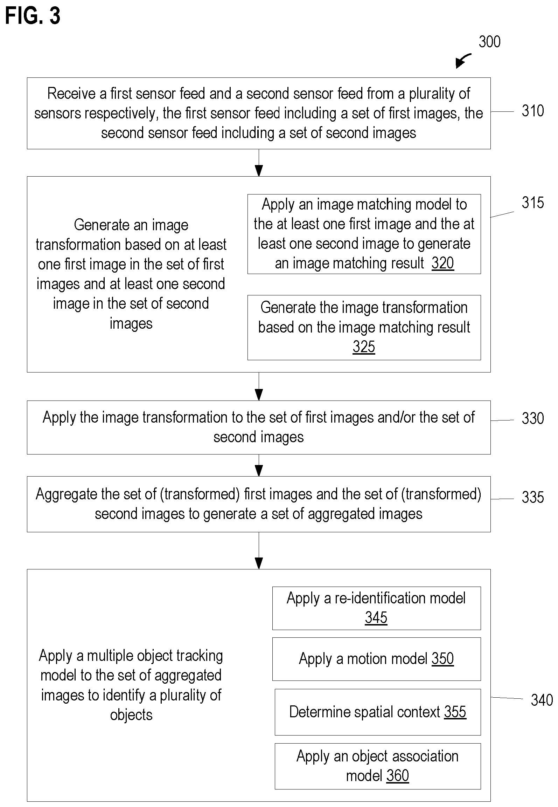

FIG. 3 is a simplified diagram showing a method 300 for multiple sensor object tracking according to certain embodiments of the present disclosure. This diagram is merely an example. One of ordinary skill in the art would recognize many variations, alternatives, and modifications. The method 300 for multiple sensor object tracking includes processes 310, 315, 320, 325, 330, 335, 340, 345, 350, 355, and 360. Although the above has been shown using a selected group of processes for the method 300 for multiple sensor object tracking, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 300 are performed by a system (e.g., the computing system 500). In certain examples, some or all processes (e.g., steps) of the method 300 are performed by a computer and/or a processor directed by a code. For example, a computer includes a server computer and/or a client computer (e.g., a personal computer). In some examples, some or all processes (e.g., steps) of the method 300 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 310, the system receives a first sensor feed and a second sensor feed from a plurality of sensors respectively, where the first sensor feed includes a set of first images and the second sensor feed includes a set of second images. In certain embodiments, the first sensor feed (e.g., video feed) is received from a first sensor, the second sensor feed is received from a second sensor different from the first sensor. In some embodiments, the first sensor is a different type of sensor from the second sensor. In certain embodiments, the first sensor has a different band from the second sensor. In some embodiments, the first sensor has a different zoom level from the second sensor. In certain embodiments, the first sensor has a different view angle from the second sensor.

According to certain embodiments, the sensor feeds (e.g., video feeds) are from two or more image sensors. In some embodiments, the video feeds are from two or more types of image sensors. In certain embodiments, each video feed includes a set of images (e.g., image frames). In some embodiments, the video feeds include a first video (e.g., a video stream) and a second video, which are corresponding to a set of first images and a set of second images. In certain embodiments, the first video feed and the second video feed are captured by different image sensors. In some embodiments, the first video feed and the second video fee are captured by different types of image sensors (e.g., narrow band image sensor, wide band image sensor, EO image sensor, IR image sensor, satellite image sensor, etc.).

According to some embodiments, the system identifies a set of detected objects in the video feeds. In certain embodiments, the system identifies a set of first detected objects in the first video and/or one or more first images in the set of first images. In some embodiments, the system identifies a set of second detected objects in the second video and/or one or more second images in the set of second images.

According to certain embodiments, at process 315, the system generates an image transformation based on at least one first image in the set of first images and at least one second image in the set of second images. In some embodiments, at process 320, which may be a part of the process 315, the system applies an image matching model (e.g., AWOGs, CFOG, etc.) to the at least one first image and the at least one second image to generate an image matching result. In certain embodiments, at process 325, which may be a part of part of the process 325, the system generates the image transformation based on the image matching result. In some embodiments, the system applies one or more image-matching techniques (e.g., AWOGs, CFOG, etc.) to the first sensor feed and the second sensor feed. In certain embodiments, the system applies one or more image-matching techniques to one or more first images in the set of first images and one or more second images in the set of second images. In certain embodiments, the system generates the image transformation using the one or more image-matching techniques. In some embodiments, the system generates an image transformation between the first video and the second video using the one or more image-matching techniques, for example, in a same pixel space.

According to certain embodiments, one or more aspects of the method 300 use a computing model (e.g., a machine-learning model). In certain embodiments, a model, also referred to as a computing model, includes a model to process data. A model includes, for example, an artificial intelligence (AI) model, a machine-learning (ML) model, a deep-learning (DL) model, an artificial neural network (ANN), a deep neural network (DNN), an image processing model, an algorithm, a rule, other computing models, and/or a combination thereof.

According to some embodiments, at process 330, the system applies the image transformation (e.g., image matching techniques) to the set of first images and/or the set of second images. In certain embodiments, the system applies the image transformation to generate a set of transformed (e.g., mapped) first images. In certain embodiments, the system applies the image transformation to the set of second images to generate a set of transformed second images. In some embodiments, the image transformation is applied to the first set of images or the set of second images. In certain embodiments, the image transformation is applied to only one of the first set of images and the set of second images.

According to certain embodiments, at process 335, the system aggregates the set of first images (e.g., the set of transformed first images) and the set of second images (e.g., the set of transformed second images) to generate a set of aggregated images. In some embodiments, the system aggregates the set of first images (e.g., the set of transformed first images) with the set of second images (e.g., the set of transformed second images) to generate the set of aggregated images based on temporal context. In certain embodiments, the system arranges a first image in the set of first images captured at a first time and a second image in the set of second images captured approximately (e.g., within 0.1 second, within 1 second, within 5 seconds, etc.) at the first time adjacent to each other in the set of aggregated images. In some embodiments, the system aggregates the set of transformed first images and the set of transformed second images to generate a set of aggregated images, including arranging a transformed first image in the set of transformed first images captured at a first time and a transformed second image in the set of transformed second images captured approximately at the first time adjacent to each other.

FIG. 4 is an example of a multiple sensor object tracking 400. In this example, two video feeds (e.g., sensor feeds) 410 and 420 are fed into an image matching algorithm. For example, the objects detected in the two video feeds 432 appear to be noisy, for example, not aligned. As an example, the image frame 412 from the video feed 410 and the image frame 422 from the video feed 420 are captured by two different sensors or two different types of sensors approximately at the same time (e.g., within 0.1 second, within 1 second, within 5 seconds, etc.). In some examples, the image matching algorithm 430 indicates the detections across the video feeds 410 and 420 are noisy (e.g., tracking ID 2 does not match tracking ID 6). In certain examples, the image frame 422 is transformed (e.g., mapped), for example, based on image matching results. For example, the transformed image frame 422 is arranged as a subsequent image frame of the image frame 412 in the set of aggregated images.

According to some embodiments, the set of first detected objects are associated with or assigned to a set of first tracking IDs and the set of second detected objects are associated with or assigned to a set of second tracking IDs different from the set of first tracking IDs. In certain embodiments, the system can match non-overlapping detections over time in a video feed (e.g., can match moving cars or people). In some embodiments, the system (e.g., MOT tracker) can match the set of first detected objects and the set of second detected objects by processing the set of aggregated images. In some embodiments, the system can match the set of first detected objects and the set of second detected objects by processing the set of aggregated images, using the object association model. In some embodiments, the non-overlapping detections across video feeds, that might be the result of the error in the image matching step, are very similar to the non-overlapping detections of moving objects, such as vehicles, in a single video feed over time. In certain embodiments, assuming the image matching error characteristics do not drastically change over time, the system may leverage a motion model, for example, to reliably generate a single set of tracks across all video feeds.

According to certain embodiments, at process 340, the system applies a multiple object tracking model to the set of aggregated images to identify a plurality of objects. In some embodiments, the system applies a re-identification model (345), applies a motion model (350), determines spatial context (355), and/or applies an object association model (360) to the set of aggregated images, for example, to identify the plurality of objects across at least two images in the set of aggregated images. In certain embodiments, the system applies an appearance model to the set of aggregated images to identify the plurality of objects across at least two images in the set of aggregated images. In some embodiments, the system applies an optimization algorithm to the first result and the second result to identify the plurality of objects across at least two images in the set of aggregated images.

According to some embodiments, the system determines a spatial relationship (e.g., spatial context) between two objects in the set of first detected objects. In certain embodiments, the spatial relationship includes a spatial graph. In some embodiments, a spatial graph includes one or more nodes of spatial locations, usually given by coordinates in one, two, or three dimensions. In some embodiments, the spatial graph includes a distance between two or more nodes. In certain embodiments, the spatial relationship includes relative positions of two or more objects. In certain embodiments, the system can be leveraged to match non-overlapping detections over time in a video feed. In some embodiments, the system includes a motion model. In certain embodiments, the motion model includes a linear motion model. In some embodiments, the motion model includes a filter that estimates the state of a linear dynamic system from a series of noisy measurements. For example, in some embodiments, the motion model includes a Kalman filter.

According to some embodiments, the system includes a re-identification (ReID) model. In certain embodiments, the re-identification model includes an appearance model (e.g., a similarity machine-learning model, a regression similarity learning model, a classification similarity learning model, a ranking similarity learning model, etc.). In some embodiments, the re-identification model includes a deep neural network-based model to capture appearance similarity. In some examples, the re-identification model includes a Siamese neural network and/or the like. In certain embodiments, the re-identification model determines one or more similarity metrics between the set of first detected objects and the set of second detected objects. In some embodiments, the re-identification model determines one or more similarity distances between the set of first detected objects and the set of second detected objects. In the example illustrated in FIG. 4, the set of first detected objects identified from the first sensor feed 410 include tracking ID 1 and tracking ID 2, and the set of second detected objects identified from the second sensor feed 420 include tracking ID 5 and ID 6. In this example, the re-identification model may determine tracking ID 1 is similar to tracking ID 5 and tracking ID 2 is similar to tracking ID 6.

According to certain embodiments, the re-identification model, the object association model, and/or the system can match and/or associate objects based on motion and/or appearance. In some embodiments, the re-identification model, the object association model, and/or the system can assign weights to one or more motion parameters and/or one or more appearance parameters. In certain embodiments, the re-identification model, the object association model, and/or the system can assign tracking IDs based on the weighted result of the motion model and/or one or more appearance model and one or more criteria, for example, one or more predetermined thresholds. In some embodiments, the re-identification model, the object association model, and/or the system can determine a first object in the set of first detected objects and a second object in the set of second detected objects to have a same tracking ID if the weighted result of the motion model and/or one or more appearance model meets one or more criteria, for example, higher than one or more predetermined thresholds.

In certain embodiments, the re-identification model, the object association model, and/or the system can determine a similarity metric between a first object in the set of first detected objects and a second object in the set of second detected objects, determine the similarity metric to be higher than a predetermined threshold, and determine the first object and the second object to have a same tracking ID and/or re-assign a tracking ID to the first object and/or the second object. In some embodiments, the re-identification model, the object association model, and/or the system can determine a similarity distance between a first object in the set of first detected objects and a second object in the set of second detected objects, determine the similarity metric to be higher than a predetermined threshold, and determine the first object and the second object to have a same tracking ID and/or re-assign a tracking ID to the first object and/or the second object.

In certain embodiments, the re-identification model, the object association model, and/or the system can determine a similarity metric between a first object in the set of first detected objects and a second object in the set of second detected objects and a spatial relationship of the first object and the second object, determine whether the similarity metric meets a similarity criterion and whether the spatial relationship meets a spatial criterion. In some embodiments, if both the similarity criterion and the spatial criterion are met, the re-identification model, the object association model, and/or the system can determine the first object and the second object to have a same tracking ID and/or re-assign a tracking ID to the first object and/or the second object.

In certain examples, the system combines the re-identification model with the motion model to assign the tracking IDs. In some examples, the system can perform fusion of sensor feeds between narrow and wide band sensors where appearances still look similar between sensors after image matching since both have similar scale, rotation, and/or the like.

According to certain embodiments, the system determines a spatial context of one or more objects. In some embodiments, the spatial context includes a spatial relationship among different objects (e.g., two or more detected objects). In certain embodiments, the spatial relationship includes a spatial graph. In some embodiments, the system includes a spatial graph matching module along with appearance and motion to more robustly fuse sensor feeds 110 among different sensors. In certain embodiments, the system can use temporal context (e.g., the track trajectory and appearance changes over time of each sensor feed) to track objects, for example, establishing the initial tracks or assigning initial tracking IDs.

According to some embodiments, the object association model (e.g., the object association module) uses or includes an optimization algorithm (e.g., Hungarian algorithm, etc.) that takes into consideration of motion and/or distance, appearance similarity, spatial context, and/or the like, to determine tracking ID assignment. In some embodiments, the object association model includes one or more association functions, for example, association functions for associating objects in different frames as one object. In the example illustrated in FIG. 4, the object tracking result 445 includes a set of re-identified tracking IDs. For example, the set of second detected objects (e.g., object 5 and object 6) in the image frame 422 are assigned to tracking IDs matching to the set of first detected objects (e.g., object 1 and object 2) in the image frame 412.

According to certain embodiments, the object association model may use spatial context, the motion model (e.g., more complex motion model), and/or different association algorithm for fusion. In some embodiments, for low confidence image matching and/or detection track matching scenarios, the system can use image matching at neighboring frames to ensemble results since for high frame rate videos, scene/objects will look very similar, and objects will not move much between neighboring frames.

According to some embodiments, to further improve runtime efficiency, if objects are sparse in an image, the system can use object region aware image matching to only match images for certain part of the images to save computation time. In certain embodiments, the system can sample templates (e.g., structured templates) only for the regions where there are objects of interest and potentially make image matching more accurate for these regions.

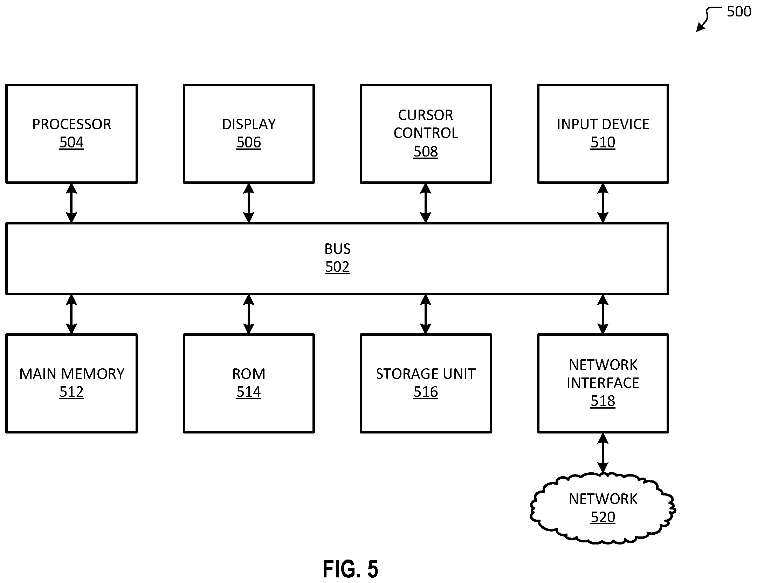

FIG. 5 is a simplified diagram showing a computing system for implementing a system 500 for multiple sensor object tracking in accordance with at least one example set forth in the disclosure. This diagram is merely an example, which should not unduly limit the scope of the claims. One of ordinary skill in the art would recognize many variations, alternatives, and modifications.

The computing system 500 includes a bus 502 or other communication mechanism for communicating information, a processor 504, a display 506, a cursor control component 508, an input device 510, a main memory 512, a read only memory (ROM) 514, a storage unit 516, and a network interface 518. In some embodiments, some or all processes (e.g., steps) of the methods 200 and/or 300 are performed by the computing system 500. In some examples, the bus 502 is coupled to the processor 504, the display 506, the cursor control component 508, the input device 510, the main memory 512, the read only memory (ROM) 514, the storage unit 516, and/or the network interface 518. In certain examples, the network interface is coupled to a network 520. For example, the processor 504 includes one or more general purpose microprocessors. In some examples, the main memory 512 (e.g., random access memory (RAM), cache and/or other dynamic storage devices) is configured to store information and instructions to be executed by the processor 504. In certain examples, the main memory 512 is configured to store temporary variables or other intermediate information during execution of instructions to be executed by processor 504. For example, the instructions, when stored in the storage unit 516 accessible to processor 504, render the computing system 500 into a special-purpose machine that is customized to perform the operations specified in the instructions. In some examples, the ROM 514 is configured to store static information and instructions for the processor 504. In certain examples, the storage unit 516 (e.g., a magnetic disk, optical disk, or flash drive) is configured to store information and instructions.

In some embodiments, the display 506 (e.g., a cathode ray tube (CRT), an LCD display, or a touch screen) is configured to display information to a user of the computing system 500. In some examples, the input device 510 (e.g., alphanumeric and other keys) is configured to communicate information and commands to the processor 504. For example, the cursor control component 508 (e.g., a mouse, a trackball, or cursor direction keys) is configured to communicate additional information and commands (e.g., to control cursor movements on the display 506) to the processor 504.

According to certain embodiments, a method for multiple sensor object tracking is provided. The method includes: receiving a first sensor feed and a second sensor feed from a plurality of sensors respectively, the first sensor feed including a set of first images, and the second sensor feed including a set of second images; generating an image transformation based on at least one first image in the set of first images and at least one second image in the set of second images; applying the image transformation to the set of second images; aggregating the set of first images and the set of transformed second images to generate a set of aggregated images; and applying a multiple object tracking model to the set of aggregated images to identify a plurality of objects, wherein the method is performed using one or more processors. For example, the method is implemented according to at least FIG. 1, FIG. 2, and/or FIG. 3.

In some embodiments, the aggregating the set of transformed first images and the set of transformed second images includes: arranging a first image in the set of first images captured at a first time and a transformed second image in the set of transformed second images captured at approximately the first time adjacent to each other. In certain embodiments, the generating an image transformation based at least in part on the first image and the second image includes: applying an image matching model to a first image in the set of first images and a second image in the set of second images to generate an image matching result; and generating the image transformation based on the image matching result. In some embodiments, the image matching model includes at least one selected from a group consisting of an angle-weighted oriented gradients (AWOGs) algorithm and a channel features of orientated gradients (CFOG) algorithm.

In certain embodiments, the method further includes: identifying a set of first detected objects from a first image in the set of first images; identifying a set of second detected objects from a second image in the set of second images; wherein the applying a multiple object tracking model to the set of aggregated images to identify a plurality of objects includes: associating the set of first detected objects and the set of second detected objects such that a specific object in the set of first detected objects is assigned to a specific tracking identifier and the specific object in the set of second detected objects is assigned to the specific tracking identifier. In some embodiments, the applying a multiple object tracking model to the set of aggregated images to identify a plurality of objects includes: applying a motion model to the set of aggregated images to identify the plurality of objects across at least two images in the set of aggregated images. In certain embodiments, the applying a multiple object tracking model to the set of aggregated images to identify a plurality of objects includes: applying an appearance model to the set of aggregated images to identify the plurality of objects across at least two images in the set of aggregated images.

In some embodiments, the applying a multiple object tracking model to the set of aggregated images to identify a plurality of objects includes: applying a motion model to the set of aggregated images to generate a first result; applying an appearance model to the set of aggregated images to generate a second result; and applying an optimization algorithm to the first result and the second result to identify the plurality of objects across at least two images in the set of aggregated images. In certain embodiments, the method further includes: determining a spatial relationship between two objects in the set of first detected objects, wherein the applying a multiple object tracking model to the set of aggregated images to identify a plurality of objects includes: associating the set of first detected objects and the set of second detected objects based at least in part on the spatial relationship. In some embodiments, the spatial relationship includes a spatial graph.

According to certain embodiments, a system for multiple sensor object tracking is provided. The system includes: at least one processor; and at least one memory storing instructions that, when executed by the at least one processor, causes the system to perform a set of operations. The set of operations includes: receiving a first sensor feed and a second sensor feed from a plurality of sensors respectively, the first sensor feed including a set of first images, and the second sensor feed including a set of second images; generating an image transformation based on at least one first image in the set of first images and at least one second image in the set of second images; applying the image transformation to the set of second images; aggregating the set of first images and the set of transformed second images to generate a set of aggregated images; and applying a multiple object tracking model to the set of aggregated images to identify a plurality of objects. For example, the system is implemented according to at least FIG. 1, FIG. 2, FIG. 3, and/or FIG. 4.

In some embodiments, the aggregating the set of transformed first images and the set of transformed second images includes: arranging a first image in the set of first images captured at a first time and a transformed second image in the set of transformed second images captured at approximately the first time adjacent to each other. In certain embodiments, the generating an image transformation based at least in part on the first image and the second image includes: applying an image matching model to a first image in the set of first images and a second image in the set of second images to generate an image matching result; and generating the image transformation based on the image matching result. In some embodiments, the image matching model includes at least one selected from a group consisting of an angle-weighted oriented gradients (AWOGs) algorithm and a channel features of orientated gradients (CFOG) algorithm.

In certain embodiments, the set of operations further includes: identifying a set of first detected objects from a first image in the set of first images; and identifying a set of second detected objects from a second image in the set of second images, wherein the applying a multiple object tracking model to the set of aggregated images to identify a plurality of objects includes: associating the set of first detected objects and the set of second detected objects such that a specific object in the set of first detected objects is assigned to a specific tracking identifier and the specific object in the set of second detected objects is assigned to the specific tracking identifier. In some embodiments, the applying a multiple object tracking model to the set of aggregated images to identify a plurality of objects includes: applying a motion model to the set of aggregated images to identify the plurality of objects across at least two images in the set of aggregated images. In certain embodiments, the applying a multiple object tracking model to the set of aggregated images to identify a plurality of objects includes: applying an appearance model to the set of aggregated images to identify the plurality of objects across at least two images in the set of aggregated images.

In some embodiments, the applying a multiple object tracking model to the set of aggregated images to identify a plurality of objects includes: applying a motion model to the set of aggregated images to generate a first result; applying an appearance model to the set of aggregated images to generate a second result; and applying an optimization algorithm to the first result and the second result to identify the plurality of objects across at least two images in the set of aggregated images. In certain embodiments, the set of operations further includes: determining a spatial relationship between two objects in the set of first detected objects, wherein the applying a multiple object tracking model to the set of aggregated images to identify a plurality of objects includes: associating the set of first detected objects and the set of second detected objects based at least in part on the spatial relationship. In some embodiments, the spatial relationship includes a spatial graph.

According to certain embodiments, a method for multiple sensor object tracking is provided. The method includes: receiving a first sensor feed and a second sensor feed from a plurality of sensors respectively, the first sensor feed including a set of first images, and the second sensor feed including a set of second images; generating an image transformation based on at least one first image in the set of first images and at least one second image in the set of second images wherein the generating an image transformation based at least in part on the first image and the second image includes: applying an image matching model to a first image in the set of first images and a second image in the set of second images to generate an image matching result; and generating the image transformation based on the image matching result. The method further includes: applying the image transformation to the set of second images; and aggregating the set of first images and the set of transformed second images to generate a set of aggregated images, wherein the aggregating the set of transformed first images and the set of transformed second images includes: arranging the first image in the set of first images captured at a first time and a transformed second image in the set of transformed second images captured at approximately the first time adjacent to each other. The method further includes: applying a multiple object tracking model to the set of aggregated images to identify a plurality of objects. In some embodiments, the method is performed using one or more processors. For example, the method is implemented according to at least FIG. 1, FIG. 2, and/or FIG. 3.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated.

## Claims

1. A method for multiple-sensor object tracking, the method comprising:
receiving (310) a first sensor feed (410) and a second sensor feed (420) from a plurality of sensors respectively, the first sensor feed comprising a set of first images, and the second sensor feed comprising a set of second images;
generating (315) an image transformation based on at least one first image in the set of first images and at least one second image in the set of second images;
applying (330) the image transformation to the set of second images to transform the set of second images to a same pixel space as the set of first images;
aggregating (335) the set of first images and the set of transformed second images to generate a set of aggregated images, wherein the aggregating the set of first images and the set of transformed second images comprises arranging a first image (412) in the set of first images captured at a first time and a transformed second image (422) in the set of transformed second images captured at approximately the first time consecutive to each other; and
applying (340) a multiple object tracking model to the set of aggregated images to identify a plurality of objects, wherein the multiple object tracking model is configured to track the plurality of objects across the set of aggregated images by treating images captured at approximately the same time by the first sensor feed and the second sensor feed as though they are consecutive images captured by a single sensor,
wherein the method is performed using one or more processors.

2. The method of claim 1, wherein the generating an image transformation based at least in part on the first image and the second image comprises:
applying (320) an image matching model to a first image in the set of first images and a second image in the set of second images to generate an image matching result; and
generating (325) the image transformation based on the image matching result.

3. The method of claim 2, wherein the image matching model includes at least one selected from a group consisting of an angle-weighted oriented gradients (AWOGs) algorithm and a channel features of orientated gradients (CFOG) algorithm.

4. The method of any preceding claim, further comprising:
identifying a set of first detected objects from a first image in the set of first images; and
identifying a set of second detected objects from a second image in the set of second images,
wherein the applying a multiple object tracking model to the set of aggregated images to identify a plurality of objects comprises:
associating the set of first detected objects and the set of second detected objects such that a specific object in the set of first detected objects is assigned to a specific tracking identifier and the specific object in the set of second detected objects is assigned to the specific tracking identifier.

5. The method of claim 4, wherein the applying a multiple object tracking model to the set of aggregated images to identify a plurality of objects comprises:
applying a motion model to the set of aggregated images to identify the plurality of objects across at least two images in the set of aggregated images.

6. The method of claim 4, wherein the applying a multiple object tracking model to the set of aggregated images to identify a plurality of objects comprises:
applying an appearance model to the set of aggregated images to identify the plurality of objects across at least two images in the set of aggregated images.

7. The method of claim 4, wherein the applying a multiple object tracking model to the set of aggregated images to identify a plurality of objects comprises:
applying a motion model to the set of aggregated images to generate a first result;
applying an appearance model to the set of aggregated images to generate a second result; and
applying an optimization algorithm to the first result and the second result to identify the plurality of objects across at least two images in the set of aggregated images.

8. The method of any of claims 4 to 7, further comprising:
determining a spatial relationship between two objects in the set of first detected objects,
wherein the applying a multiple object tracking model to the set of aggregated images to identify a plurality of objects comprises:
associating the set of first detected objects and the set of second detected objects based at least in part on the spatial relationship.

9. The method of claim 8, wherein the spatial relationship includes a spatial graph.

10. The method of any preceding claim,
wherein the generating an image transformation based at least in part on the first image and the second image comprises:
applying (320) an image matching model to a first image in the set of first images and a second image in the set of second images to generate an image matching result; and
generating (325) the image transformation based on the image matching result,
and
wherein the aggregating the set of transformed first images and the set of transformed second images comprises:
arranging the first image in the set of first images captured at a first time and a transformed second image in the set of transformed second images captured at approximately the first time adjacent to each other.

11. A system for multiple-sensor object tracking, the system comprising:
at least one processor (504); and
at least one memory (512) storing instructions that, when executed by the at least one processor, causes the system to perform the method of any preceding claim.

12. Computer program instructions that, when executed, cause performance of the method of any of claims 1 to 10.

## Patentansprüche

1. Verfahren zur Mehrfachsensorobjektverfolgung, wobei das Verfahren Folgendes umfasst:
Empfangen (310) eines ersten Sensor-Datenstroms (410) und eines zweiten Sensor-Datenstroms (420) von jeweils einer Vielzahl von Sensoren, wobei der erste Sensor-Datenstrom einen Satz von ersten Bildern umfasst und der zweite Sensor-Datenstrom einen Satz von zweiten Bildern umfasst;
Generieren (315) einer Bildtransformation basierend auf mindestens einem ersten Bild in dem Satz von ersten Bildern und mindestens einem zweiten Bild in dem Satz von zweiten Bildern;
Anwenden (330) der Bildtransformation auf den Satz von zweiten Bildern, um den Satz von zweiten Bildern in einen gleichen Pixelraum wie den Satz von ersten Bildern zu transformieren;
Aggregieren (335) des Satzes von ersten Bildern und des Satzes von transformierten zweiten Bildern, um einen Satz von aggregierten Bildern zu generieren, wobei das Aggregieren des Satzes von ersten Bildern und des Satzes von transformierten zweiten Bildern Anordnen eines ersten Bildes (412) in dem Satz von ersten Bildern, die zu einem ersten Zeitpunkt erfasst wurden, und eines transformierten zweiten Bildes (422) in dem Satz von transformierten zweiten Bildern, die zu ungefähr dem ersten Zeitpunkt aufeinanderfolgend erfasst wurden, umfasst; und
Anwenden (340) eines Mehrfachobjektverfolgungsmodells auf den Satz von aggregierten Bildern, um eine Vielzahl von Objekten zu identifizieren, wobei das Mehrfachobjektverfolgungsmodell dazu konfiguriert ist, die Vielzahl von Objekten über den Satz von aggregierten Bildern zu verfolgen, indem Bilder, die ungefähr zu dem gleichen Zeitpunkt durch den ersten Sensor-Datenstrom und dem zweiten Sensor-Datenstrom erfasst wurden, so behandelt werden, als ob es sich um aufeinanderfolgende Bilder handelt, die durch einen einzigen Sensor erfasst wurden,
wobei das Verfahren unter Verwendung eines oder mehrerer Prozessoren durchgeführt wird.

2. Verfahren nach Anspruch 1, wobei das Generieren einer Bildtransformation basierend mindestens teilweise auf dem ersten Bild und dem zweiten Bild Folgendes umfasst:
Anwenden (320) eines Bildanpassungsmodells auf ein erstes Bild in dem Satz von ersten Bildern und ein zweites Bild in dem Satz von zweiten Bildern, um ein Bildanpassungsergebnis zu generieren; und
Generieren (325) der Bildtransformation basierend auf dem Bildanpassungsergebnis.

3. Verfahren nach Anspruch 2, wobei das Bildanpassungsmodell mindestens eines beinhaltet, das aus einer Gruppe ausgewählt ist, die aus einem Algorithmus für winkelgewichtete ausgerichtete Gradienten (AWOGs) und einem Algorithmus für Kanalmerkmale eines ausgerichteten Gradienten (CFOG) besteht.

4. Verfahren nach einem vorhergehenden Anspruch, ferner umfassend:
Identifizieren eines Satzes von ersten detektierten Objekten aus einem ersten Bild in dem Satz von ersten Bildern; und
Identifizieren eines Satzes von zweiten detektierten Objekten aus einem zweiten Bild in dem Satz von zweiten Bildern,
wobei das Anwenden eines Mehrfachobjektverfolgungsmodells auf den Satz von aggregierten Bildern, um eine Vielzahl von Objekten zu identifizieren, Folgendes umfasst:
Zuordnen des Satzes von ersten detektierten Objekten und des Satzes von zweiten detektierten Objekten, sodass ein spezifisches Objekt in dem Satz von ersten detektierten Objekten einer spezifischen Verfolgungskennung zugewiesen wird und das spezifische Objekt in dem Satz von zweiten detektierten Objekten der spezifischen Verfolgungskennung zugewiesen wird.

5. Verfahren nach Anspruch 4, wobei das Anwenden eines Mehrfachobjektverfolgungsmodells auf den Satz von aggregierten Bildern, um eine Vielzahl von Objekten zu identifizieren, Folgendes umfasst:
Anwenden eines Bewegungsmodells auf den Satz von aggregierten Bildern, um die Vielzahl von Objekten über mindestens zwei Bilder in dem Satz von aggregierten Bildern zu identifizieren.

6. Verfahren nach Anspruch 4, wobei das Anwenden eines Mehrfachobjektverfolgungsmodells auf den Satz von aggregierten Bildern, um eine Vielzahl von Objekten zu identifizieren, Folgendes umfasst:
Anwenden eines Erscheinungsmodells auf den Satz von aggregierten Bildern, um die Vielzahl von Objekten über mindestens zwei Bilder in dem Satz von aggregierten Bildern zu identifizieren.

7. Verfahren nach Anspruch 4, wobei das Anwenden eines Mehrfachobjektverfolgungsmodells auf den Satz von aggregierten Bildern, um eine Vielzahl von Objekten zu identifizieren, Folgendes umfasst:
Anwenden eines Bewegungsmodells auf den Satz von aggregierten Bildern, um ein erstes Ergebnis zu generieren;
Anwenden eines Erscheinungsmodells auf den Satz von aggregierten Bildern, um ein zweites Ergebnis zu generieren; und
Anwenden eines Optimierungsalgorithmus auf das erste Ergebnis und das zweite Ergebnis, um die Vielzahl von Objekten über mindestens zwei Bilder in dem Satz von aggregierten Bildern zu identifizieren.

8. Verfahren nach einem der Ansprüche 4 bis 7, ferner umfassend:
Bestimmen einer räumlichen Beziehung zwischen zwei Objekten in dem Satz von ersten detektierten Objekten, wobei das Anwenden eines Mehrfachobjektverfolgungsmodells auf den Satz von aggregierten Bildern, um eine Vielzahl von Objekten zu identifizieren, Folgendes umfasst:
Zuordnen des Satzes von ersten detektierten Objekten und des Satzes von zweiten detektierten Objekte basierend mindestens teilweise auf der räumlichen Beziehung.

9. Verfahren nach Anspruch 8, wobei die räumliche Beziehung einen räumlichen Graphen beinhaltet.

10. Verfahren nach einem vorhergehenden Anspruch,
wobei das Generieren einer Bildtransformation basierend mindestens teilweise auf dem ersten Bild und dem zweiten Bild Folgendes umfasst:
Anwenden (320) eines Bildanpassungsmodells auf ein erstes Bild in dem Satz von ersten Bildern und ein zweites Bild in dem Satz von zweiten Bildern, um ein Bildanpassungsergebnis zu generieren; und
Generieren (325) der Bildtransformation basierend auf dem Bildanpassungsergebnis und
wobei das Aggregieren des Satzes von transformierten ersten Bildern und des Satzes von transformierten zweiten Bildern Folgendes umfasst:
Anordnen des ersten Bildes in dem Satz von ersten Bildern, die zu einem ersten Zeitpunkt erfasst wurden, und eines transformierten zweiten Bildes in dem Satz von transformierten zweiten Bildern, die ungefähr zu dem ersten Zeitpunkt benachbart zueinander erfasst wurden.

11. System zur Mehrfachsensorobjektverfolgung, wobei das System Folgendes umfasst:
mindestens einen Prozessor (504); und
mindestens einen Speicher (512), auf dem Anweisungen gespeichert sind, die bei Ausführung durch den mindestens einen Prozessor das System dazu veranlassen, das Verfahren nach einem vorhergehenden Anspruch durchzuführen.

12. Computerprogrammanweisungen, die bei Ausführung die Durchführung des Verfahrens nach einem der Ansprüche 1 bis 10 veranlassen.

## Revendications

1. Procédé de suivi d'objet à capteurs multiples, le procédé comprenant :
la réception (310) d'un premier flux de données de capteur (410) et d'un second flux de données de capteur (420) en provenance d'une pluralité de capteurs respectivement, le premier flux de données de capteur comprenant un ensemble de premières images, et le second flux de données de capteur comprenant un ensemble de secondes images ;
la génération (315) d'une transformation d'image sur la base d'au moins une première image de l'ensemble de premières images et d'au moins une seconde image de l'ensemble de secondes images ;
l'application (330) de la transformation d'image à l'ensemble de secondes images afin de transformer l'ensemble de secondes images dans un même espace de pixels que l'ensemble de premières images ;
l'agrégation (335) de l'ensemble de premières images et de l'ensemble de secondes images transformées pour générer un ensemble d'images agrégées, dans lequel l'agrégation de l'ensemble de premières images et de l'ensemble de secondes images transformées comprend l'agencement d'une première image (412) de l'ensemble de premières images capturée à un premier instant et d'une seconde image transformée (422) de l'ensemble de secondes images transformées capturée approximativement au premier instant de manière consécutive l'une à l'autre ; et
l'application (340) d'un modèle de suivi d'objets multiples à l'ensemble d'images agrégées pour identifier une pluralité d'objets, dans lequel le modèle de suivi d'objets multiples est configuré pour suivre la pluralité d'objets à travers l'ensemble d'images agrégées en traitant des images capturées approximativement au même instant par le premier flux de données de capteur et le second flux de données de capteur comme si elles étaient des images consécutives capturées par un seul capteur,
dans lequel le procédé est réalisé à l'aide d'un ou de plusieurs processeurs.

2. Procédé selon la revendication 1, dans lequel la génération d'une transformation d'image sur la base au moins en partie de la première image et de la seconde image comprend :
l'application (320) d'un modèle de mise en correspondance d'images à une première image de l'ensemble de premières images et à une seconde image de l'ensemble de secondes images pour générer un résultat de mise en correspondance d'images ; et
la génération (325) de la transformation d'image sur la base du résultat de mise en correspondance d'images.

3. Procédé selon la revendication 2, dans lequel le modèle de mise en correspondance d'images comprend au moins un élément sélectionné dans un groupe comprenant un algorithme de gradients orientés pondérés en fonction de l'angle (AWOG) et un algorithme de gradients orientés à caractéristiques de canal (CFOG).

4. Procédé selon l'une quelconque des revendications précédentes, comprenant en outre :
l'identification d'un ensemble de premiers objets détectés à partir d'une première image de l'ensemble de premières images ; et
l'identification d'un ensemble de seconds objets détectés à partir d'une seconde image de l'ensemble de secondes images,
dans lequel l'application d'un modèle de suivi d'objets multiples à l'ensemble d'images agrégées pour identifier une pluralité d'objets comprend :
l'association de l'ensemble de premiers objets détectés et de l'ensemble de seconds objets détectés de telle sorte qu'un objet spécifique de l'ensemble de premiers objets détectés soit attribué à un identificateur de suivi spécifique et que l'objet spécifique de l'ensemble de seconds objets détectés soit attribué à l'identificateur de suivi spécifique.

5. Procédé selon la revendication 4, dans lequel l'application d'un modèle de suivi d'objets multiples à l'ensemble d'images agrégées pour identifier une pluralité d'objets comprend :
l'application d'un modèle de mouvement à l'ensemble d'images agrégées pour identifier la pluralité d'objets à travers au moins deux images de l'ensemble d'images agrégées.

6. Procédé selon la revendication 4, dans lequel l'application d'un modèle de suivi d'objets multiples à l'ensemble d'images agrégées pour identifier une pluralité d'objets comprend :
l'application d'un modèle d'apparence à l'ensemble d'images agrégées pour identifier la pluralité d'objets à travers au moins deux images de l'ensemble d'images agrégées.

7. Procédé selon la revendication 4, dans lequel l'application d'un modèle de suivi d'objets multiples à l'ensemble d'images agrégées pour identifier une pluralité d'objets comprend :
l'application d'un modèle de mouvement à l'ensemble d'images agrégées pour générer un premier résultat ;
l'application d'un modèle d'apparence à l'ensemble d'images agrégées pour générer un deuxième résultat ; et
l'application d'un algorithme d'optimisation au premier résultat et au deuxième résultat pour identifier la pluralité d'objets à travers au moins deux images de l'ensemble d'images agrégées.

8. Procédé selon l'une quelconque des revendications 4 à 7, comprenant en outre :
la détermination d'une relation spatiale entre deux objets de l'ensemble de premiers objets détectés,
dans lequel l'application d'un modèle de suivi d'objets multiples à l'ensemble d'images agrégées pour identifier une pluralité d'objets comprend :
l'association de l'ensemble de premiers objets détectés et de l'ensemble de seconds objets détectés sur la base au moins en partie de la relation spatiale.

9. Procédé selon la revendication 8, dans lequel la relation spatiale comprend un graphique spatial.

10. Procédé selon l'une quelconque des revendications précédentes,
dans lequel la génération d'une transformation d'image sur la base au moins en partie de la première image et de la seconde image comprend :
l'application (320) d'un modèle de mise en correspondance d'images à une première image de l'ensemble de premières images et à une seconde image de l'ensemble de secondes images pour générer un résultat de mise en correspondance d'images ; et
la génération (325) de la transformation d'image sur la base du résultat de mise en correspondance d'images, et
dans lequel l'agrégation de l'ensemble de premières images transformées et de l'ensemble de secondes images transformées comprend :
l'agencement de la première image de l'ensemble de premières images capturée à un premier instant et d'une seconde image transformée de l'ensemble de secondes images transformées capturée approximativement au premier instant de manière adjacente l'une à l'autre.

11. Système de suivi d'objet à capteurs multiples, le système comprenant :
au moins un processeur (504) ; et
au moins une mémoire (512) stockant des instructions qui, lorsqu'elles sont exécutées par l'au moins un processeur, amènent le système à réaliser le procédé selon l'une quelconque des revendications précédentes.

12. Instructions de programme informatique qui, lorsqu'elles sont exécutées, amènent l'exécution du procédé selon l'une quelconque des revendications 1 à 10.
